# EUROPÄISCHE PATENTSCHRIFT

(11) **EP 2 668 692 B1**
(45) Veröffentlichungstag und Bekanntmachung des Hinweises auf die Patenterteilung: **21.06.2017**
(21) Anmeldenummer: 11793387.9
(22) Anmeldetag: 28.11.2011
(51) Int. Cl.: H01M 10/42, H01M 10/052, H01M 10/0567, H01M 4/58

(54) **REDOXADDITIV FÜR SEKUNDÄRZELLEN MIT FLÜSSIG-FEST-PHASENWECHSEL**
REDOX ADDITIVE FOR SECONDARY CELLS WITH LIQUID-SOLID PHASE CHANGE
ADDITIF REDOX POUR CELLULES SECONDAIRES À CHANGEMENT DE PHASE LIQUIDE-SOLIDE

(30) Priorität: 26.01.2011 DE 102011003197
(43) Veröffentlichungstag der Anmeldung: 04.12.2013
(73) Patentinhaber: Robert Bosch GmbH, 70442 Stuttgart (DE)
(72) Erfinder: CHRISTENSEN, Jake, Mountain View Canada 94040 (US); WEGNER, Marcus, 71229 Leonberg (DE); GRIMMINGER, Jens, 89250 Senden (DE); TENZER, Martin, 71701 Schwieberdingen (DE)
(86) Internationale Anmeldenummer: PCT/EP2011/071201
(87) Internationale Veröffentlichungsnummer: WO 2012/100862

(56) Entgegenhaltungen:
- WO-A2-2006/094069
- US-A- 4 857 423
- US-A1- 2006 208 701
- US-A1- 2010 081 059
- US-A1- 2010 129 724

## Beschreibung

Die vorliegende Erfindung betrifft eine Sekundärzelle und die Verwendung eines Redoxadditivs.

### Stand der Technik

Lithium-Schwefel-Zellen sind aufgrund ihrer hohen theoretischen spezifischen Kapazität von 1672 mAh/g von besonderem Interesse, insbesondere für die Energieversorgung von Elektrofahrzeugen.

Lithium-Schwefel-Zellen basieren auf der chemischen Gesamtreaktion Li + S₈ ⇄ Li₂S, welche über mehrere Zwischenstufen abläuft, während denen Polysulfide mit unterschiedlich langen Schwefelketten gebildet werden. Polysulfide mit einer Kettenlänge von drei bis acht Schwefelatomen sind in den derzeit eingesetzten Elektrolyten, beispielsweise DME/DOL/LiTFSI-Mischungen, gut löslich. Das Zwischenprodukt Li₂S₂ und das Endprodukt Li₂S sind in den derzeit eingesetzten Elektrolyten jedoch nur schlecht löslich und fallen beim Entladevorgang als Feststoffe aus. Dabei kann der elektrische Kontakt zu den Li₂S₂- und Li₂S-Festkörpern verloren gehen, was dazu führt, dass das ausgefallene Li₂S₂ und Li₂S bei folgenden Ladevorgängen nicht oder nur teilweise wieder zu elementarem Lithium und Schwefel umgesetzt werden kann. Zudem weisen Li₂S₂ und Li₂S eine schlechte elektrische Leitfähigkeit und damit einen hohen elektrischen Widerstand auf.

Aus der US 2006/208701 A1 und der US 2010/129724 A1 ist eine Lithiumschwefelzelle bekannt, die eine Kathode mit einem elektrochemisch aktiven Kathodenaktivmaterial sowie eine Anode mit einem elektrochemisch aktiven Anodenmaterial sowie einen flüssigen Elektrolyten umfasst.

Weiterhin ist aus der US 4857423 eine Sekundärzelle bekannt, die eine Kathode mit einem elektrochemisch aktiven Kathodenmaterial, beispielsweise Schwefel aufweist und eine Anode mit einem elektrochemisch aktiven Anodenaktivmaterial sowie einen Elektrolyten, wobei das Kathodenaktivmaterial und/oder das Anodenaktivmaterial beim Lade- oder Entladevorgang von einer Festphasenform in eine im Elektrolyten lösliche Flüssigphasenform wechselt.

### Offenbarung der Erfindung

Die Erfindung wird durch die in Anspruch 1 genannten Merkmale definiert. Gegenstand der vorliegenden Erfindung ist eine Sekundärzelle (Sekundärbatterie/Akkumulator), welche eine Kathode mit einem elektrochemisch aktiven Kathodenaktivmaterial, eine Anode mit einem elektrochemisch aktiven Anodenaktivmaterial und einen flüssigen Elektrolyten umfasst, wobei das Kathodenaktivmaterial und/oder das Anodenaktivmaterial beim Lade- oder Entladevorgang von einer Festphasenform in eine im Elektrolyten lösliche Flüssigphasenform wechselt. Die Festphasenform des phasenwechselnden Elektrodenaktivmaterials kann dabei in dem Elektrolyten insbesondere nicht oder kaum löslich sein. Beispielsweise kann es sich bei einer solchen Sekundärzelle um eine Alkali-SchwefelZelle, insbesondere eine Lithium-Schwefel-Zelle, oder um Zellen mit Blei, Eisen, Zink und/oder Mangan als Anodenaktivmaterial und Bleioxid, Manganoxid, Titanoxid, Nickeloxid und/oder Cobaltoxid als Kathodenaktivmaterial handeln.

Erfindungsgemäß umfasst die Sekundärzelle weiterhin mindestens ein Redoxadditiv, welches in reduzierter und oxidierter Form in dem Elektrolyten löslich ist und welches geeignet ist, derart mit dem phasenwechselnden Elektrodenaktivmaterial in einer Redoxreaktion zu reagieren, dass das Elektrodenaktivmaterial von der Festphasenform in die Flüssigphasenform umwandelbar ist beziehungsweise umgewandelt wird.

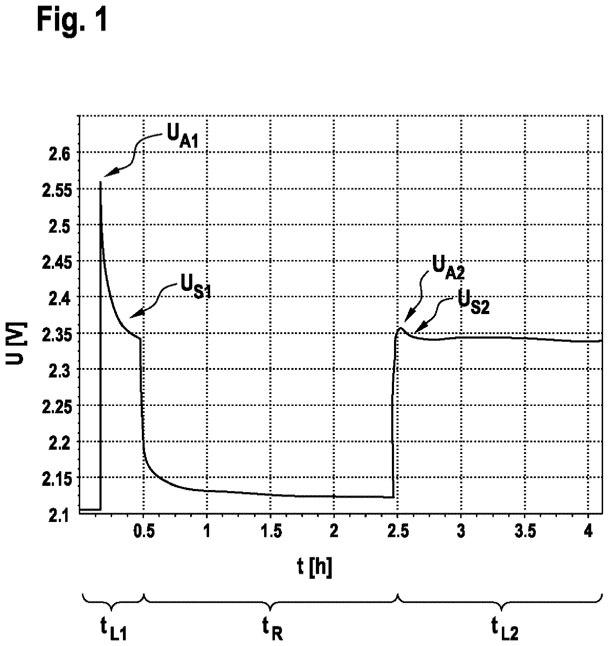

Die Erfindung beruht auf der Erkenntnis, dass die Umwandlung der Festphasenform, beispielsweise von Li₂S und Li₂S₂, in die Flüssigphasenform, beispielsweise Polysulfide mit einer Kettenlänge von drei bis acht Schwefelatomen, bei derartigen Sekundärzellen der limitierende Faktor ist und die Reaktionskinetik der Gesamtreaktion, beispielsweise Li + S₈ ⇄ Li₂S, verlangsamt, über mehrere Lade-Entlade-Zyklen zu immer höher werdenden Überspannungen führt und die Zyklenstabilität der Sekundärzelle begrenzt. Dies wird ausführlich im Zusammenhang mit der Beschreibung von Figur 1 erläutert.

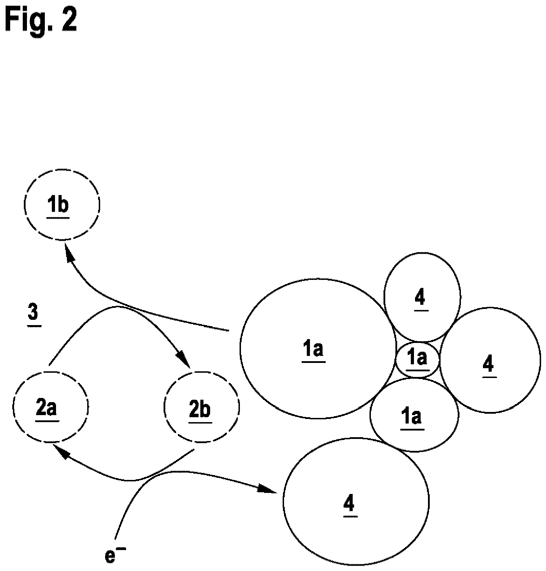

Im Rahmen der vorliegenden Erfindung hat sich herausgestellt, dass die Umwandlung der Festphasenform in die Flüssigphasenform durch Zugabe eines Redoxadditivs deutlich beschleunigt werden kann, welches sowohl in reduzierter als auch in oxidierter Form in dem Elektrolyten löslich und damit mobil ist und welches mit der immobilen Festphasenform des phasenwechselnden Elektrodenaktivmaterials eine Redoxreaktion eingehen kann, bei der das Elektrodenaktivmaterial in die mobile Flüssigphasenform umgewandelt wird. Dies wird ausführlich im Zusammenhang mit der Beschreibung von Figur 2 erläutert.

Insgesamt kann so durch das erfindungsgemäße Redoxadditiv vorteilhafterweise die Reaktionskinetik der Gesamtreaktion, beispielsweise Li + S₈ ⇄ Li₂S, und damit die Lade/Entladegeschwindigkeit der Sekundärzelle verbessert, Überspannungen beim Lade/Entladevorgang gesenkt und die Zyklenstabilität erhöht werden.

Im Rahmen einer Ausführungsform wechselt das Kathodenaktivmaterial beim Ladevorgang von einer Festphasenform, beispielsweise Dilithiumsulfid (Li₂S) oder Dilithiumdisulfid (Li₂S₂), in eine im Elektrolyten lösliche Flüssigphasenform, beispielsweise Polysulfide mit einer Kettenlänge von drei bis acht Schwefelatomen. Vorzugsweise ist dabei das Redoxadditiv geeignet, derart mit dem phasenwechselnden Kathodenaktivmaterial in einer Redoxreaktion zu reagieren, dass das Kathodenaktivmaterial von der Festphasenform in die Flüssigphasenform umwandelbar ist oder umgewandelt wird.

Im Rahmen einer weiteren Ausführungsform wechselt das Kathodenaktivmaterial beim Ladevorgang von einer reduzierten Festphasenform, beispielsweise Dilithiumsulfid (Li₂S) oder Dilithiumdisulfid (Li₂S₂), in eine oxidierte Flüssigphasenform, beispielsweise Polysulfide mit einer Kettenlänge von drei bis acht Schwefelatomen. Vorzugsweise ist dabei die oxidierte Form des Redoxadditivs geeignet mit der reduzierten Festphasenform des Kathodenaktivmaterials, beispielsweise Dilithiumsulfid (Li₂S) oder Dilithiumdisulfid (Li₂S₂), unter Reduktion des Redoxadditivs zur reduzierten Form und Oxidation des Kathodenaktivmaterials zur oxidierten Flüssigphasenform, beispielsweise Polysulfide mit einer Kettenlänge von drei bis acht Schwefelatomen, zu reagieren.

Im Rahmen einer weiteren Ausführungsform, insbesondere im Fall eines Kathodenaktivmaterials, welches beim Ladevorgang von einer Festphasenform, beispielsweise Dilithiumsulfid (Li₂S) oder Dilithiumdisulfid (Li₂S₂), in eine im Elektrolyten lösliche Flüssigphasenform, beispielsweise Polysulfide mit einer Kettenlänge von drei bis acht Schwefelatomen wechselt, ist das Redoxpotential des Redoxadditivs größer/positiver als das Redoxpotential des Festphasenform/Flüssigphasenform-Redoxpaares des phasenwechselnden Kathodenaktivmaterials. So kann vorteilhafterweise gewährleistet werden, dass das Redoxadditiv mit dem phasenwechselnden Elektrodenaktivmaterial in einer Redoxreaktion reagiert, bei der das das Elektrodenaktivmaterial von der Festphasenform in die Flüssigphasenform umgewandelt wird. Erfindungsgemäß ist. das Redoxpotential des Redoxadditivs nicht größer/positiver als die Summe aus dem Betrag der, insbesondere anfänglichen, Kathodenüberspannung und des Redoxpotentials des Festphasenform/Flüssigphasenform-Redoxpaares des phasenwechselnden Kathodenaktivmaterials sein.

Im Rahmen einer weiteren Ausführungsform, insbesondere im Fall eines Kathodenaktivmaterials, welches beim Ladevorgang von einer Festphasenform, beispielsweise Dilithiumsulfid (Li₂S) oder Dilithiumdisulfid (Li₂S₂), in eine im Elektrolyten lösliche Flüssigphasenform, beispielsweise Polysulfide mit einer Kettenlänge von drei bis acht Schwefelatomen wechselt, ist daher das Redoxpotential des Redoxadditivs kleiner/negativer als die Summe aus dem Redoxpotential des Festphasenform/Flüssigphasenform-Redoxpaares des phasenwechselnden Kathodenaktivmaterials und dem Betrag der, insbesondere anfänglichen, Kathodenüberspannung. So kann vorteilhafterweise die Überspannung gesenkt und die Zyklenstabilität verbessert werden.

Im Rahmen einer weiteren Ausführungsform, insbesondere im Fall eines Kathodenaktivmaterials, welches beim Ladevorgang von einer Festphasenform, beispielsweise Dilithiumsulfid (Li₂S) oder Dilithiumdisulfid (Li₂S₂), in eine im Elektrolyten lösliche Flüssigphasenform, beispielsweise Polysulfide mit einer Kettenlänge von drei bis acht Schwefelatomen wechselt, ist das Redoxpotential des Redoxadditivs um ≥ 50 mV bis ≤ 200 mV größer/positiver als das Redoxpotential des Festphasenform/Flüssigphasenform-Redoxpaares des phasenwechselnden Kathodenaktivmaterials. Ein Redoxadditiv einzusetzen, dessen Redoxpotential um ≥ 50 mV bis ≤ 200 mV größer/positiver ist als das Redoxpotential des Festphasenform/Flüssigphasenform-Redoxpaares des phasenwechselnden Kathodenaktivmaterials, hat sich insbesondere für Lithium-Schwefel-Zellen als vorteilhaft erwiesen, da bei diesen Zellen die anfängliche Kathodenüberspannung üblicherweise höher als 200 mV ist.

Beispielsweise kann im Fall von Lithium-Schwefel-Zellen das Redoxpotential des Redoxadditivs, insbesondere bezogen auf Li/Li⁺, kleiner als 2,55 V, beispielsweise kleiner oder gleich 2,5 V oder 2,45 V oder 2,4 V oder 2,35 V, sein. Zum Beispiel kann das Redoxpotential des Redoxadditivs im Fall von Lithium-Schwefel-Zellen, insbesondere bezogen auf Li/Li⁺, in einem Bereich von ≥ 2,0 V bis ≤ 2,3 V, beispielsweise von ≥ 2,1 V bis ≤ 2,2 V, liegen.

Alternativ oder zusätzlich kann das Kathodenaktivmaterial beim Entladevorgang von einer Festphasenform, beispielsweise festem Schwefel, in eine im Elektrolyten lösliche Flüssigphasenform, beispielsweise Polysulfide mit einer Kettenlänge von drei bis acht Schwefelatomen, wechseln. In diesem Fall ist das Redoxadditiv vorzugsweise geeignet, derart mit dem phasenwechselnden Kathodenaktivmaterial in einer Redoxreaktion zu reagieren, dass das Kathodenaktivmaterial von der Festphasenform in die Flüssigphasenform umwandelbar ist oder umgewandelt wird. Beispielsweise kann das Kathodenaktivmaterial beim Entladevorgang von einer oxidierten Festphasenform, beispielsweise festem Schwefel, in eine reduzierte Flüssigphasenform, beispielsweise Polysulfide mit einer Kettenlänge von drei bis acht Schwefelatomen, wechseln. Vorzugsweise ist dabei die reduzierte Form des Redoxadditivs geeignet mit der oxidierten Festphasenform des Kathodenaktivmaterials, beispielsweise festem Schwefel, unter Oxidation des Redoxadditivs zur oxidierten Form und Reduktion des Kathodenaktivmaterials zur reduzierten Flüssigphasenform, beispielsweise Polysulfide mit einer Kettenlänge von drei bis acht Schwefelatomen, zu reagieren. In diesem Fall ist das Redoxpotential des Redoxadditivs vorzugsweise kleiner/negativer als das Redoxpotential des Festphasenform/Flüssigphasenform-Redoxpaares des phasenwechselnden Kathodenaktivmaterials und/oder größer/positiver als die Differenz aus dem Redoxpotential des Festphasenform/Flüssigphasenform-Redoxpaares des phasenwechselnden Kathodenaktivmaterials und dem Betrag der, insbesondere anfänglichen, Kathodenüberspannung. Beispielsweise kann dabei das Redoxpotential des Redoxadditivs um ≥ 50 mV bis ≤ 200 mV kleiner/negativer als das Redoxpotential des Festphasenform/Flüssigphasenform-Redoxpaares des phasenwechselnden Kathodenaktivmaterials sein.

Alternativ oder zusätzlich kann das Anodenaktivmaterial beim Ladevorgang von einer Festphasenform in eine im Elektrolyten lösliche Flüssigphasenform wechsein. In diesem Fall ist das Redoxadditiv vorzugsweise geeignet, derart mit dem phasenwechselnden Anodenaktivmaterial in einer Redoxreaktion zu reagieren, dass das Anodenaktivmaterial von der Festphasenform in die Flüssigphasenform umwandelbar ist oder umgewandelt wird. Beispielsweise kann das Anodenaktivmaterial beim Ladevorgang von einer oxidierten Festphasenform in eine reduzierte Flüssigphasenform wechseln. Vorzugsweise ist dabei die reduzierte Form des Redoxadditivs geeignet mit der oxidierten Festphasenform des Anodenaktivmaterials unter Oxidation des Redoxadditivs zur oxidierten Form und Reduktion des Anodenaktivmaterials zur reduzierten Flüssigphasenform zu reagieren. In diesem Fall ist das Redoxpotential des Redoxadditivs vorzugsweise kleiner/negativer als das Redoxpotential des Festphasenform/Flüssigphasenform-Redoxpaares des phasenwechselnden Anodenaktivmaterials und/oder größer/positiver als die Differenz aus dem Redoxpotential des Festphasenform/Flüssigphasenform-Redoxpaares des phasenwechselnden Anodenaktivmaterials und dem Betrag der, insbesondere anfänglichen, Anodenüberspannung. Beispielsweise kann dabei das Redoxpotential des Redoxadditivs um ≥ 50 mV bis ≤ 200 mV kleiner/negativer als das Redoxpotential des Festphasenform/Flüssigphasenform-Redoxpaares des phasenwechselnden Anodenaktivmaterials sein.

Alternativ oder zusätzlich kann das Anodenaktivmaterial beim Entladevorgang von einer Festphasenform, beispielsweise metallischem Lithium, Blei, Eisen, Zink und/oder Mangan, in eine im Elektrolyten lösliche Flüssigphasenform, beispielsweise ionischem Lithium, Blei, Eisen, Zink und/oder Mangan, wechseln. In diesem Fall ist das Redoxadditiv vorzugsweise geeignet, derart mit dem phasenwechselnden Anodenaktivmaterial in einer Redoxreaktion zu reagieren, dass das Anodenaktivmaterial von der Festphasenform in die Flüssigphasenform umwandelbar ist oder umgewandelt wird. Beispielsweise kann das Anodenaktivmaterial beim Entladevorgang von einer reduzierten Festphasenform in eine oxidierte Flüssigphasenform wechseln. Vorzugsweise ist dabei die oxidierte Form des Redoxadditivs geeignet mit der reduzierten Festphasenform des Anodenaktivmaterials unter Reduktion des Redoxadditivs zur reduzierten Form und Oxidation des Anodenaktivmaterials zur oxidierten Flüssigphasenform zu reagieren. In diesem Fall ist das Redoxpotential des Redoxadditivs vorzugsweise größer/positiver als das Redoxpotential des Festphasenform/Flüssigphasenform-Redoxpaares des phasenwechselnden Anodenaktivmaterials und/oder kleiner/negativer als die Summe aus dem Redoxpotential des Festphasenform/Flüssigphasenform-Redoxpaares des phasenwechselnden Anodenaktivmaterials und dem Betrag der, insbesondere anfänglichen, Anodenüberspannung. Beispielsweise kann dabei das Redoxpotential des Redoxadditivs um ≥ 50 mV bis ≤ 200 mV größer/positiver als das Redoxpotential des Festphasenform/Flüssigphasenform-Redoxpaares des phasenwechselnden Anodenaktivmaterials sein.

Die Redoxreaktion zwischen dem Redoxadditiv und dem Elektrodenaktivmaterial, insbesondere Kathodenaktivmaterial beziehungsweise Anodenaktivmaterial, weist vorzugsweise eine hohe Reversibilität, beispielsweise eine Coulomb-Effizienz nahe 100 %, insbesondere ≥ 99,9%, und eine höhere Reaktionsgeschwindigkeit als die der Redoxreaktion des Festphasenform/Flüssigphasenform-Redoxpaares des Elektrodenaktivmaterial, insbesondere des Kathodenaktivmaterials beziehungsweise Anodenaktivmaterials, auf.

Vorzugsweise geht das Redoxadditiv keine Reaktion mit dem Elektrolyten, dem Gegenelektrodenaktivmaterial oder anderen Zellkomponenten ein. Insofern das Redoxadditiv mit dem Gegenelektrodenaktivmaterial reagieren kann, kann dieses durch eine, beispielsweise polymere oder keramische, oder einer kombiniert polymer-keramischen Schutzschicht vor einer Reaktion mit dem Redoxadditiv geschützt werden.

Im Rahmen einer weiteren Ausführungsform ist das Kathodenaktivmaterial Schwefel.

Im Rahmen einer weiteren Ausführungsform ist das Anodenaktivmaterial Lithium.

Im Rahmen einer weiteren Ausführungsform ist die reduzierte Festphasenform des Kathodenaktivmaterials Dilithiumsulfid (Li₂S) und/oder Dilithiumdisulfid (Li₂S₂).

Erfindungsgemäß ist das Redoxadditiv ausgewählt aus der Gruppe bestehend aus Nitrobenzol, Benzophenon, Naphthalin, Metallocenen und Kombinationen davon. Derartige Redoxadditive haben sich für Lithium-Schwefel-Zellen als vorteilhaft erwiesen. Beispielsweise sind zur Oxidation von Dilithiumsulfid (Li₂S) und/oder Dilithiumdisulfid (Li₂S₂) zu Polysulfiden mit einer Kettenlänge von drei bis acht Schwefelatomen Nitrobenzol, Benzophenon und Metallocene geeignet, da Nitrobenzol (Ph-NO₂) in Bezug auf Lithium in DMF mit 0,1 M NaClO₄ ein Redoxpotential von 2,2765 V und in Bezug auf Lithium in Acetonitril mit 0,2 M Tetraethylammoniumperchlorat (TEAP) ein Redoxpotential von 2,1365 V, Benzophenon (Ph-COPh) in Bezug auf Lithium in Ammoniak mit 0,1 M Kl bei - 50 °C ein Redoxpotential von 2,0565 V, Naphthalin in Bezug auf Lithium in (Polyethylenoxid)*LiTFSI ein Redoxpotential von 2,0 V und Metallocene, beispielsweise Cobaltocen (Bis(cyclopentadienyl)cobalt), in Bezug auf Lithium einen Redoxpotentialbereich von 1,70 V bis 2,2 V aufweisen. Das Redoxpotential kann dabei durch Substituenten an dem oder den aromatischen Ringen eingestellt werden. Bei Metallocenen kann das Redoxpotential zudem durch die Metallionart eingestellt werden. Die vorstehenden Redoxpotentiale der Gruppe bestehend aus Nitrobenzol, Benzophenon, Naphthalin und Metallocenen wurden in Bezug auf eine wässrige Kalomelelektrode gemessen und dann in Bezug auf Li/Li⁺ umgerechnet. Die Redoxpotentiale können in Abhängigkeit vom Lösungsmittel variieren. Es hat sich jedoch gezeigt, dass das Lösungsmittel das Redoxpotential kaum beeinflusst.

Der Elektrolyt kann ein oder mehrere Lösungsmittel umfassen, welche beispielsweise ausgewählt sind aus der Gruppe bestehend aus Kohlensäureestern, wie Ethylencarbonat (EC), Propylencarbonat (PC), Dimethylcarbonat (DMC), Diethylcarbonat (DEC), Vinylencarbonat (VC), Lactonen, wie γ-Butyrolacton (GBL), Ethern, insbesondere zyklischen oder azyklischen Ethern, wie 1,3-Dioxolan (DOL) beziehungsweise Dimethylether/Ethylenglycoldimethylether (DME); Polyethern, wie Tetraethylenglykoldimethylether, und Kombinationen davon. Darüber hinaus kann der Elektrolyt ein oder mehrere Leitsalze umfassen, welche beispielsweise ausgewählt sind aus der Gruppe bestehend aus Lithiumbis(trifluormethylsulphonyl)imid (LiTFSI), Lithiumhexafluorophosphat (LiPF₆), Lithiumtetrafluoroborat (LiBF₄), Lithiumtrifluormethansulfonat (LiCF₃SO₃), Lithiumperchlorat (LiClO₄), Lithiumbis(oxalato)borat (LiBOB), Lithium-fluorid (LiF), Lithiumnitrat (LiNO₃), Lithiumhexafluoroarsenat (LiAsF₆) und Kombinationen davon.

Neben dem Kathodenaktivmaterial und Anodenaktivmaterial können die Elektroden noch weitere Komponenten, beispielsweise Leitzusätze, wie Graphit und/oder Ruß, und/oder Bindemittel, wie Polyvinylidendifluorid (PVDF), umfassen.

Erfindungsgemäße Sekundärzellen, insbesondere Lithium-Schwefel-Zellen, können beispielsweise in Notebooks, PDAs, Tablet-Computern, Mobiltelefonen, elektronischen Büchern, Elektrowerkzeugen, Gartenwerkzeugen, Fahrzeugen, wie Hybrid-, Plug-in-Hybrid- und Elektrofahrzeugen, eingesetzt werden.

Hinsichtlich weiterer Merkmale und Vorteile der erfindungsgemäßen Sekundärzelle wird hiermit explizit auf die Erläuterungen im Zusammenhang mit der erfindungsgemäßen Verwendung sowie der Figurenbeschreibung verwiesen. Weiter offenbar ist die Verwendung eines, insbesondere organischen oder metallorganischen, beispielsweise organischen oder metallorganischen aromatischen, Redoxadditivs, zum Beispiel von Nitrobenzol und/oder Benzophenon und/oder Naphthalin und/oder eines oder mehrerer Metallocene, zur Senkung einer Überspannung und/oder zur Erhöhung der Lade/Entlade-Geschwindigkeit und/oder zur Erhöhung der Zyklenbeständigkeit von einer Sekundärzelle mit einem, beim Lade- oder Entladevorgang von einer Festphasenform in eine in einem Elektrolyten lösliche Flüssigphasenform wechselnden Elektrodenaktivmaterial, insbesondere Kathodenaktivmaterial, beispielsweise einer Alkali-Schwefel-Zelle, insbesondere einer Lithium-Schwefel-Zelle, insbesondere wobei das Redoxadditiv in dem Elektrolyten löslich ist und geeignet ist, derart mit dem phasenwechselnden Elektrodenaktivmaterial in einer Redoxreaktion zu reagieren, dass das Elektrodenaktivmaterial von der Festphasenform in die Flüssigphasenform umgewandelt wird.

Hinsichtlich weiterer Merkmale und Vorteile der Verwendung wird hiermit explizit auf die Erläuterungen im Zusammenhang mit der erfindungsgemäßen Sekundärzelle sowie der Figurenbeschreibung verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen Graphen zur Veranschaulichung des Spannungsverlaufs bei einem Ladeexperiment an einer bereits vorher mehrfach geladenen und entladenen Lithium-Schwefel-Zelle; und
- Fig. 2: eine schematische Darstellung des Funktionsprinzips eines erfindungsgemäßen Redoxadditivs mit einem fest/flüssig-phasenwechselnden Elektrodenaktivmaterial.

Figur 1 zeigt den Spannungsverlauf bei einem Ladeexperiment an einer bereits mehrfach geladenen Lithium-Schwefel-Zelle. Figur 1 zeigt, dass zu Beginn des Ladevorgangs in einer ersten Ladephase t_{L1} eine hohe anfängliche Überspannung U_{A1} auftritt, welche dann wieder abnimmt U_{S1}. Figur 1 veranschaulicht weiterhin, dass wenn die erste Ladephase t_{L1} anschließend abgebrochen wird und nach Verstreichen einer gewissen Relaxationszeit t_{R} (hier 2 Stunden) mit einer zweiten Ladephase t_{L2} begonnen wird, die anfängliche Überspannung U_{A2} der zweiten Ladephase t_{L2} niedriger ist als die anfängliche Überspannung U_{A1} der ersten Ladephase t_{L1} und der Spannungsabfall U_{S2} der zweiten Ladephase t_{L2} weniger signifikant als der Spannungsabfall U_{S1} der ersten Ladephase t_{L1}.

Ohne sich dabei auf eine Theorie festlegen zu wollen, kann dies dadurch erklärt werden, dass: Im vollkommen entladenen Zustand Li₂S₂ und Li₂S als immobiler Feststoff mit einer geringen elektrischen Leitfähigkeit vorliegt, was in einer hohen anfänglichen Überspannung U_{A1} in der ersten Ladephase t_{L1} resultiert. Beim Ladevorgang wird ein Teil des Li₂S₂ und Li₂S zu kurzkettigen, in dem Elektrolyten löslichen und damit mobilen Polysulfiden oxidiert, welche in der Lage sind, sich stromleitenden Strukturen der Zelle, beispielsweise Graphit- und/oder Rußstrukturen, anzunähern, an denen die Polysulfide weiter zu längerkettigen, ebenfalls mobilen Polysulfiden oxidiert werden. Die längerkettigen Polysulfide, beispielsweise Li₂S₄, können dann wiederum mit dem Li₂S₂ und Li₂S zu kürzerkettigen mobilen Polysulfiden, beispielsweise 2 Li₂S₄ + Li₂S ⇄ 3 Li₂S₃, komproportionieren. Die mobilen Komproportionierungsprodukte, beispielsweise Li₂S₃, können sich dann wieder den stromleitenden Strukturen annähern, an denen sie zu längerkettigen mobilen Polysulfiden oxidiert werden, welche wiederum mit weiterem Li₂S₂ und Li₂S komproportionieren können. Die mobilen Polysulfide können folglich als eine Art innerer Katalysator fungieren, welcher Elektronen vom Li₂S₂ und Li₂S auf die stromleitenden Strukturen überträgt. Während des Ladevorgangs steigt die Konzentration der mobilen Polysulfide, was den Spannungsabfall U_{S1} erklärt. Während der Relaxationsphase t_{R} können die längerkettigen mobilen Polysulfide weiter mit Li₂S₂ und Li₂S zu kürzerkettigen mobilen Polysulfiden komproportionieren. So stehen während der zweiten Ladephase t_{L2} mehr mobile Reaktionspartner zur Verfügung als während der ersten Ladephase t_{L1}, was dazu führt, dass die anfängliche Überspannung U_{A2} der zweiten Ladephase t_{L2} niedriger ist als die anfängliche Überspannung U_{A1} der ersten Ladephase und der Spannungsabfall U_{S2} der zweiten Ladephase t_{L2} weniger signifikant als der Spannungsabfall U_{S1} der ersten Ladephase t_{L1} ist.

Figur 2 illustriert das Funktionsprinzip eines erfindungsgemäßen Redoxadditivs mit einem fest/flüssig-phasenwechselnden Elektrodenaktivmaterial. Das Funktionsprinzip wird im Folgenden am Beispiel einer Lithium-Schwefel-Zelle erläutert. Dabei soll die Erläuterung anhand einer Lithium-Schwefel-Zelle nur zur besseren Veranschaulichung dienen und nicht dazu herangezogen werden, die Erfindung auf diese Art von Sekundärzelle und Schwefel als Kathodenaktivmaterial zu beschränken.

Figur 2 zeigt, dass die Lithium-Schwefel-Zelle ein Kathodenaktivmaterial aufweist, welches beim Ladevorgang von einer im Elektrolyten 3 kaum oder nicht löslichen Festphasenform 1a, nämlich Li₂S und/oder Li₂S₂, in eine im Elektrolyten 3 lösliche Flüssigphasenform 1b, nämlich Polysulfide mit einer Kettenlänge von drei bis acht Schwefelatomen, überführt wird. Allerdings kann diese Reaktion insbesondere mangels einer elektrischen Kontaktierung der stromleitenden Strukturen 4, wie Graphit und/oder Ruß, und/oder aufgrund einer großen Partikelgröße des Elektrodenaktivmaterials und/oder aufgrund einer geringen elektrischen Leitfähigkeit des Elektrodenaktivmaterials kinetisch gehemmt sein. Durch das erfindungsgemäße Redoxadditiv 2a,2b, welches sowohl in seiner oxidierten Form 2a als auch in seiner reduzierten Form 2b in dem Elektrolyten 3 löslich und damit mobil ist, kann diese kinetische Hemmung aufgehoben werden.

Im Fall einer Lithium-Schwefelzelle kann beispielsweise die gelöste oxidierte Form 2a des Redoxadditivs, beispielsweise von Nitrobenzol, Benzophenon, Naphthalin oder eines Metallocenes, direkt nach dem Beginn des Ladevorgangs gebildet werden, welche dann schnell mit der ungelösten und damit immobilen Festphasenform 1a des Kathodenaktivmaterials unter Ausbildung der Flüssigphasenform 1b abreagiert. Insbesondere kann dabei festes Li₂S und/oder Li₂S₂ 1a zu löslichen Polysulfiden mit einer Kettenlänge von drei bis acht Schwefelatomen 1b oxidiert und die oxidierte Form des Redoxadditivs 2a zur reduzierten Form 2b reduziert werden. Das Redoxadditiv kann dabei erneut oxidiert werden und somit als Katalysator dienen. Die löslichen Polysulfide 1b können zu den stromleitenden Strukturen der Sekundärzelle diffundieren, an denen sie weiter oxidiert werden können und im Folgenden mit weiterem Li₂S und/oder Li₂S₂ komproportionieren und als weiterer Katalysator dienen können.

Durch die Reaktion mit dem erfindungsgemäßen Redoxadditiv kann vorteilhafterweise auch schlecht oder nicht angebundenes Elektrodenaktivmaterial in der Festphasenform 1a, wie Li₂S und/oder Li₂S₂, schnell in die Flüssigphasenform 1 b, wie lösliche Polysulfide, umgewandelt werden. So kann vorteilhafterweise die Reaktionskinetik der Gesamtrektion verbessert, die Überspannung gesenkt und die Zyklenstabilität erhöht werden.

Das erfindungsgemäße Prinzip ist auf jedes beim Ladevorgang oder beim Entladevorgang zwischen einer festen und flüssigen Phase wechselndes Elektrodenaktivmaterial, also auch auf Anodenaktivmaterialien und Redoxreaktionen bei denen das Redoxadditiv nicht als Oxidationsmittel, sondern als Reduktionsmittel fungiert, anwendbar.

## Patentansprüche

1. Sekundärzelle, umfassend
- eine Kathode mit einem elektrisch aktiven Kathodenaktivmaterial (1a,1b),
- eine Anode mit einem elektrochemisch aktiven Anodenaktivmaterial und
- einen flüssigen Elektrolyten,
wobei das Kathodenaktivmaterial (1a,1b) und/oder das Anodenaktivmaterial beim Lade- oder Entladevorgang von einer Festphasenform (1a) in eine im Elektrolyten lösliche Flüssigphasenform (1b) wechselt, wobei die Sekundärzelle mindestens ein Redoxadditiv (2a,2b) umfasst, welches in reduzierter (2b) und oxidierter Form (2a) in dem Elektrolyten löslich ist und welches geeignet ist, derart mit dem phasenwechselnden Elektrodenaktivmaterial (1a,1b) in einer Redoxreaktion zu reagieren, dass das Elektrodenaktivmaterial (1a,1b) von der Festphasenform (1a) in die Flüssigphasenform (1b) umwandelbar ist, wobei das Redoxadditiv (2a,2b) ausgewählt ist aus der Gruppe bestehend aus Benzophenon, Naphthalin, Metallocene und Kombinationen davon, **dadurch gekennzeichnet, dass** das Redoxpotential des Redoxadditivs (2a, 2b) nicht größer oder positiver als die Summe aus dem Betrag der, insbesondere anfänglichen, Kathodenüberspannung und des Redoxpotentials des Festphasenform-/Flüssigphasenform-Redoxpaares des phasenwechselnden Kathodenaktivmaterials (1a, 1b) ist.

2. Sekundärzelle nach Anspruch 1, wobei das Kathodenaktivmaterial (1 a,1 b) Schwefel und das Anodenaktivmaterial Lithium ist.

3. Sekundärzelle nach Anspruch 1 oder 2, wobei die reduzierte Festphasenform (1 a) des Kathodenaktivmaterials (1 a, 1 b) Dilithiumsulfid (Li₂S) und/oder Dilithiumdisulfid (Li₂S₂) ist.

4. Sekundärzelle nach einem der Ansprüche 1 bis 3, wobei die Sekundärzelle eine Alkali-Schwefel-Zelle ist.

5. Sekundärzelle nach einem der Ansprüche 1 bis 3, wobei die Sekundärzelle eine Lithium-Schwefel-Zelle ist.

## Claims

1. Secondary cell comprising
- a cathode having an electrically active cathode active material (1a, 1b),
- an anode having an electrochemically active anode active material and
- a liquid electrolyte
where the cathode active material (1a, 1b) and/or the anode active material changes from a solid-phase form (1a) into a liquid-phase form (1b) which is soluble in the electrolyte during the charging or discharging process, where the secondary cell comprises at least one redox additive (2a, 2b) which is soluble in reduced form (2b) and oxidized form (2a) in the electrolyte and is suitable for reacting with the phase-changing electrode active material (1a, 1b) in a redox reaction in such a way that the electrode active material (1a, 1b) can be converted from the solid-phase form (1a) into the liquid-phase form (1b), where the redox additive (2a, 2b) is selected from the group consisting of benzophenone, naphthalene, metallocenes and combinations thereof, **characterized in that** the redox potential of the redox additive (2a, 2b) is not greater or more positive than the sum of the absolute value of the, in particular initial, cathode overvoltage and the redox potential of the solid-phase form/liquid-phase form redox pair of the phase-changing cathode active material (1a, 1b).

2. Secondary cell according to Claim 1, wherein the cathode active material (1a, 1b) is sulphur and the anode active material is lithium.

3. Secondary cell according to Claim 1 or 2, wherein the reduced solid-phase form (1a) of the cathode active material (1a, 1b) is dilithium sulphide (Li₂S) and/or dilithium disulphide (Li₂S₂).

4. Secondary cell according to any of Claims 1 to 3, wherein the secondary cell is an alkali-sulphur cell.

5. Secondary cell according to any of claims 1 to 3, wherein the secondary cell is a lithium-sulphur cell.

## Revendications

1. Cellule secondaire, comprenant
- une cathode comportant un matériau actif de cathode (1a, 1b),
- une anode comportant un matériau actif d'anode électrochimiquement actif, et
- un électrolyte liquide,
dans lequel le matériau actif de cathode (1a, 1b) et/ou le matériau actif d'anode alternent, lors du processus de charge ou de décharge, d'une forme en phase solide (1a) en une forme en phase liquide (1b) soluble dans l'électrolyte, dans lequel la cellule secondaire comprend au moins un additif redox (2a, 2b) qui est soluble sous forme réduite (2b) et oxydée (2a) dans l'électrolyte et qui est approprié pour réagir avec le matériau actif d'électrode (1a, 1b) changeant de phase, lors d'une réaction redox, de manière à ce que le matériau actif d'électrode (1a, 1b) puisse être converti d'une forme en phase solide (1a) en la forme en phase liquide (1b), dans lequel l'additif redox (2a, 2b) est sélectionné dans le groupe constitué de la benzophénone, de la naphtaline, d'un métallocène et d'une combinaison de ceux-ci, **caractérisée en ce que** le potentiel redox de l'additif redox (2a, 2b) n'est pas plus élevé ou n'est pas plus positif que la somme de la surtension de cathode, notamment initiale, et du potentiel redox de la paire redox de la forme en phase solide/de la forme en phase liquide du matériau actif de cathode (1a, 1b) changeant de phase.

2. Cellule secondaire selon la revendication 1, dans laquelle le matériau actif de cathode (1a, 1b) est le soufre et le matériau actif d'anode est le lithium.

3. Cellule secondaire selon la revendication 1 ou 2, dans laquelle la forme en phase solide (1a) réduite du matériau actif de cathode (1a, 1b) est le sulfure de dilithium (Li₂S) et/ou le disulfure de dilithium (Li₂S₂).

4. Cellule secondaire selon l'une quelconque des revendications 1 à 3, dans laquelle la cellule secondaire est une cellule d'alcali-soufre.

5. Cellule secondaire selon l'une quelconque des revendications 1 à 3, dans laquelle la cellule secondaire est une cellule de lithium-soufre.
